(19) **Europäisches Patentamt / European Patent Office / Office européen des brevets**

(11) **EP 4 213 573 A1**

(12) **EUROPEAN PATENT APPLICATION**

(43) Date of publication:
**19.07.2023 Bulletin 2023/29**

(21) Application number: **22213963.6**

(22) Date of filing: **15.12.2022**

(51) International Patent Classification (IPC):
**H04W 72/50** (2023.01)   **H04W 72/566** (2023.01)
**H04W 72/121** (2023.01)

(52) Cooperative Patent Classification (CPC):
**H04W 72/535; H04W 72/121; H04W 72/566**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.01.2022 GB 202200533**

(71) Applicant: **Airspan IP Holdco LLC
Boca Raton, FL 33431 (US)**

(72) Inventors:
• **LOGOTHETIS, Andrew**
  **High Wycombe, HP10 8DN (GB)**
• **CHEN, Jiangling**
  **Ruislip, HA4 9TP (GB)**
• **SARAO, Honey Kanwar Singh**
  **Slough, SL1 6AU (GB)**
• **PERSAUD, Marlon Peter**
  **Beaconsfield, HP9 1JJ (GB)**

(74) Representative: **D Young & Co LLP
120 Holborn
London EC1N 2DY (GB)**

(54) **TECHNIQUE FOR SCHEDULING DOWNLINK DATA ALLOCATIONS AND UPLINK DATA ALLOCATIONS IN A WIRELESS NETWORK**

(57)    A base station for wireless communication with a plurality of terminals and a method of operating a base station are described. The base station comprises downlink scheduling circuitry to perform a downlink scheduling process and uplink scheduling circuitry to perform a corresponding uplink scheduling process, the uplink scheduling process being constrained based on results of the downlink scheduling process. In addition, the uplink scheduling circuitry is configured to provide, to the downlink scheduling circuitry, a control signal to influence the downlink scheduling process.

BASE STATION

FIG. 1

EP 4 213 573 A1

**Description**

The present technique relates to the field of wireless communication.

A wireless communications network may include one or more base stations and one or more terminals. The one or more base stations may be part of a network of interconnected base stations, allowing the terminals to connect to a communications network (e.g. such as a mobile data (e.g. cellular) network), and each base station may communicate with (e.g. transmit downlink data to and receive uplink data from) the one or more terminals via wireless communication, employing a standard such as 5G, LTE, or any other wireless communication Standard. In a particular example of a wireless communications network, the terminals could be installed in moving vehicles such as aircraft.

A single base station may communicate with a plurality of terminals at any given time (e.g. a one-to-many arrangement), by adopting a suitable technology such as multiple-input-multiple-output (MIMO) technology where multiple antennas are used to support the transmitting and receiving of multiple data signals simultaneously over the same wireless communication resources. In addition, it is often the case that multiple base stations may be deployed in order to provide coverage for a larger area.

A base station may communicate with terminals on one or more beams; for example, the base station may generate a number of transmission beams to transmit data (referred to as "downlink" data) to the terminals, and may generate one or more reception beams on which data (referred to as "uplink" data) may be received from the terminals. These beams are typically directional, and may also be fairly narrow. Whilst this can improve performance, for example by increasing range and reducing interference, it may mean that the base station can only communicate with a subset of the terminals using a given beam. Moreover, the number of beams that can be employed at any given time may also be limited, for example due to regulatory and/or hardware limitations, which can further limit the number of terminals with which the base station can communicate at a given point in time.

Communication between the base station and the terminals may be performed in a scheduled manner. For example, transmission and reception of uplink data and downlink data may be performed within predetermined time slots that include downlink time slots (also referred to herein as transmission time slots) dedicated to transmission of downlink data and uplink time slots (also referred to herein as reception time slots) dedicated to reception of uplink data. Accordingly, the base station may perform scheduling processes to determine how to allocate between the terminals the available wireless communication resources for communication between the base station and the terminals. The need for an efficient scheduling technique may become even greater if the available resources are limited and/or if the number or terminals is large.

The scheduling processes may allocate wireless communication resources for use during both uplink and downlink communication - e.g. wireless communication resources to be used by the base station to transmit downlink data (downlink resources) and wireless communication resources to be used by the terminals to transmit uplink data (uplink resources). Thus, there may be a need to inform the terminals of the uplink resources they have been allocated. However, the base station may be arranged to transmit this uplink resource information as part of the downlink data, using the downlink resources allocated for downlink communication. This can, potentially, limit which terminals can receive the uplink resource information in a given downlink time slot, which in turn may limit which terminals can be allocated uplink resources. This can lead to an unfair distribution of uplink resources.

Viewed from a first example of the present technique, there is provided a base station for wireless communication with a plurality of terminals, the base station comprising:

wireless communication circuitry configured, during transmission time slots allocated for transmission, to transmit downlink data for reception by one or more of the terminals, and further configured, during reception time slots allocated for reception, to receive uplink data transmitted by one or more of the terminals;

downlink scheduling circuitry configured to perform a downlink scheduling process for each transmission time slot, wherein the downlink scheduling process comprises, for a given transmission slot, determining one or more downlink data allocations, each downlink data allocation identifying a terminal to which downlink data is to be transmitted in the given transmission time slot and, for each identified terminal, wireless communication resources to be used by the wireless communication circuitry during the given transmission time slot to transmit the downlink data to the identified terminal;

uplink scheduling circuitry configured, once the downlink scheduling process for the given transmission time slot has been performed, to perform a corresponding uplink scheduling process comprising, for one or more reception time slots subsequent to the given transmission time slot, determining one or more uplink data allocations, each uplink data allocation identifying a terminal which is allocated to transmit uplink data within the one or more reception time slots and, for each identified terminal, the wireless communication resources to be used for that identified terminal during the one or more reception time slots; and

control information generation circuitry to generate, for transmission in the given transmission time slot, downlink control information identifying the one or more downlink data allocations determined for the given transmission time slot, and uplink control information identifying the one or more uplink data allocations determined for the one or more reception time slots subsequent to the given transmission time slot;

wherein the uplink scheduling circuitry is constrained, when performing the corresponding uplink scheduling process, to determine the uplink data allocations so that the terminal associated with each uplink data allocation will be able to receive the uplink control information, given the wireless communication resources to be employed by the wireless communication circuitry during the given transmission time slot; and

wherein the uplink scheduling circuitry is configured to provide, to the downlink scheduling circuitry, a control signal to influence the downlink scheduling process for each transmission time slot.

Viewed from another example of the present technique, there is provided a method of operating a base station for wireless communication with a plurality of terminals, the method comprising:

during transmission time slots allocated for transmission, transmitting downlink data for reception by one or more of the terminals;

during reception time slots allocated for reception, receiving uplink data transmitted by one or more of the terminals;

performing, using downlink scheduling circuitry, a downlink scheduling process for each transmission time slot, wherein the downlink scheduling process comprises, for a given transmission slot, determining one or more downlink data allocations, each downlink data allocation identifying a terminal to which downlink data is to be transmitted in the given transmission time slot and, for each identified terminal, wireless communication resources to be used during the given transmission time slot to transmit the downlink data to the identified terminal;

once the downlink scheduling process for the given transmission time slot has been performed, performing, using uplink scheduling circuitry, a corresponding uplink scheduling process comprising, for one or more reception time slots subsequent to the given transmission time slot, determining one or more uplink data allocations, each uplink data allocation identifying a terminal which is allocated to transmit uplink data within the one or more reception time slots and, for each identified terminal, the wireless communication resources to be used for that identified terminal during the one or more reception time slots; and

generating, for transmission in the given transmission time slot, downlink control information identifying the one or more downlink data allocations determined for the given transmission time slot, and uplink control information identifying the one or more uplink data allocations determined for the one or more reception time slots subsequent to the given transmission time slot;

wherein during the corresponding uplink scheduling process, the determination of the uplink data allocations is constrained so that the terminal associated with each uplink data allocation will be able to receive the uplink control information, given the wireless communication resources to be employed during the given transmission time slot; and

wherein the method further comprises the uplink scheduling circuitry providing, to the downlink scheduling circuitry, a control signal to influence the downlink scheduling process for each transmission time slot.

Viewed from another example of the present technique, there is provided a base station for wireless communication with a plurality of terminals, the base station comprising:

means for transmitting, during transmission time slots allocated for transmission, downlink data for reception by one or more of the terminals;

means for receiving, during reception time slots allocated for reception, uplink data transmitted by one or more of the terminals;

means for performing a downlink scheduling process for each transmission time slot, wherein the downlink scheduling process comprises, for a given transmission slot, determining one or more downlink data allocations, each downlink data allocation identifying a terminal to which downlink data is to be transmitted in the given transmission time slot and, for each identified terminal, wireless communication resources to be used during the given transmission time slot to transmit the downlink data to the identified terminal;

means for performing, once the downlink scheduling process for the given transmission time slot has been performed, a corresponding uplink scheduling process comprising, for one or more reception time slots subsequent to the given transmission time slot, determining one or more uplink data allocations, each uplink data allocation identifying a terminal which is allocated to transmit uplink data within the one or more reception time slots and, for each identified terminal, the wireless communication resources to be used for that identified terminal during the one or more reception time slots; and

means for generating, for transmission in the given transmission time slot, downlink control information identifying the one or more downlink data allocations determined for the given transmission time slot, and uplink control information identifying the one or more uplink data allocations determined for the one or more reception time slots subsequent to the given transmission time slot;

wherein during the corresponding uplink scheduling process, the determination of the uplink data allocations is constrained so that the terminal associated with each uplink data allocation will be able to receive the uplink control information, given the wireless communication resources to be employed during the given transmission time slot; and wherein the means for performing the uplink scheduling process is further configured to provide, to the means for performing the downlink scheduling process, a control signal to influence the downlink scheduling process for each transmission time slot.

Further aspects, features and advantages of the present technique will be apparent from the following description of examples, which is to be read in conjunction with the accompanying drawings, in which:

Figure 1 schematically illustrates a base station;
Figure 2 is a diagram illustrating an example of how time slots may be arranged in a communication frame;
Figure 3 illustrates communication between a single base station and multiple terminals using multiple beams;
Figure 4 is a flow diagram illustrating a method including a downlink scheduling process and an uplink scheduling process;
Figure 5 is a graph of resource allocations versus time when a method such as that shown in Figure 4 is performed; and
Figure 6 is a graph of downlink throughput per terminal versus the number of terminals, in a case where a method such as that shown in Figure 4 is performed and in a case where a different method is performed.

Before discussing example implementations with reference to the accompanying figures, the following description of example implementations and associated advantages is provided.

In accordance with one example configuration there is provided a base station for wireless communication with a plurality of terminals (e.g. items of user equipment). The base station comprises wireless communication circuitry configured, during transmission time slots allocated for transmission, to transmit downlink data for reception by one or more of the terminals, and further configured, during reception time slots allocated for reception, to receive uplink data transmitted by one or more of the terminals. For example, the wireless communication circuitry may be constrained to transmit data during transmission time slots, so that it is available to receive uplink data at other times (e.g. during reception time slots).

The base station also comprises downlink scheduling circuitry configured to perform a downlink scheduling process for each transmission time slot, wherein the downlink scheduling process comprises, for a given transmission slot, determining one or more downlink data allocations, each downlink data allocation identifying a terminal to which downlink data is to be transmitted in the given transmission time slot and, for each identified terminal, wireless communication resources to be used by the wireless communication circuitry during the given transmission time slot to transmit the downlink data to the identified terminal. The base station also comprises uplink scheduling circuitry configured, once the downlink scheduling process for the given transmission time slot has been performed, to perform a corresponding uplink scheduling process comprising, for one or more reception time slots subsequent to the given transmission time slot, determining one or more uplink data allocations, each uplink data allocation identifying a terminal which is allocated to transmit uplink data within the one or more reception time slots and, for each identified terminal, the wireless communication resources to be used for that identified terminal during the one or more reception time slots.

The uplink scheduling circuitry may be separate from the downlink scheduling circuitry, or the uplink and downlink scheduling processes may be separate processes running on the same circuitry. The uplink scheduling process comprises determining uplink data allocations to be employed during future reception time slots (e.g. the one or more reception time slots subsequent to the given transmission time slot), not during the given transmission time slot. Hence, it will be appreciated that references in this application to performing an uplink scheduling process "for" a given transmission time slot refer to an uplink scheduling process which is performed after the downlink scheduling process for the given transmission time slot (e.g. an uplink scheduling process to generate uplink data allocations that are transmitted in the given transmission time slot) - the uplink scheduling process does not involve allocating any wireless communication resources within the given (or any) transmission time slot.

The base station also comprises control information generation circuitry to generate, for transmission in the given transmission time slot, downlink control information and uplink control information. In this application, "downlink control information" (DCI) comprises information generated by the control information generation circuitry of the base station, which identifies the one or more downlink data allocations determined for the given transmission time slot, and "uplink control information" (UCI) comprises information generated by the control information generation circuitry of the base station, which identifies the one or more uplink data allocations determined for the one or more reception time slots subsequent to the given transmission time slot. Hence control information transmitted in a given transmission slot includes not only the downlink control information (DCI) for the given transmission slot, but also the uplink control information (UCI) for one or more reception time slots subsequent to the given transmission time slot. However, it will only be possible to contact a terminal to provide it with UCI in the given transmission time slot if that terminal is capable of receiving the UCI taking into account the wireless communication resources employed during the given transmission time slot, which will in turn depend on the downlink data allocations determined for the given transmission time slot. Therefore, the uplink scheduling process for a given time slot is dependent on the wireless communication resources selected in the corresponding downlink scheduling process. In particular, the uplink scheduling circuitry is constrained, when performing the corresponding uplink scheduling process, to determine the uplink data allocations so that the terminal associated with each uplink data allocation will be able to receive the uplink control information, given the wireless communication resources to be employed by the wireless communications circuitry during the given transmission time slot.

Since the uplink data allocations to be transmitted in a given transmission time slot are determined after all of the downlink data allocations for that slot have been determined, this places a restriction on which terminals can be included in the uplink data allocations (e.g. only terminals which can be contacted in the given transmission time slot (taking into account the wireless communication resources defined for the downlink data allocations determined for the given transmission time slot) can be included in the uplink data allocations transmitted during the given transmission time slot). The inventors of the present technique realised that this constraint placed on the uplink scheduling circuitry can have a significant effect on the distribution of wireless communication resources among the terminals for uplink communication, and in particular can lead to some terminals being allocated a disproportionately large portion of the wireless communication resources, while others may be allocated significantly fewer wireless communication resources.

One approach to improving the distribution of wireless communication resources could be to provide circuitry which performs a combined uplink/downlink scheduling process to determine the downlink control information and the uplink control information to be transmitted in the given transmission time slot together. However, the inventors realised that such an approach would require significantly more complex logic than is used in existing scheduling circuitry, which may be costly and inefficient.

Instead, the inventors realised that it is possible for the uplink scheduling circuitry to be configured to provide, to the downlink scheduling circuitry, a control signal to influence the downlink scheduling process for each transmission time slot. The control signal provides a hint or nudge that influences the downlink data allocations determined during the downlink scheduling process, so that the corresponding uplink scheduling process can distribute the uplink communication resources between the terminals more fairly.

The control signal is not particularly limited in this example, and can be any signal which nudges the downlink scheduling circuitry as described above.

By providing a control signal between the uplink scheduling circuitry and the downlink scheduling circuitry, the present technique allows the distribution of wireless communication resources during reception time slots to be adjusted to be fairer, while allowing the advantages of performing separate uplink and downlink scheduling processes (e.g. simplicity and efficiency) to be maintained.

In some examples, the downlink scheduling circuitry is configured to repeat the downlink scheduling process for each transmission time slot, and the uplink scheduling circuitry is configured to perform the corresponding uplink scheduling process after each repetition of the downlink scheduling process.

Hence, control information (including DCI and UCI) may be transmitted during each transmission time slot - for example, the control information may be included in the first items of data transmitted by the base station in each transmission time slot, in order to notify the identified terminals that downlink data is being provided in that transmission time slot, and/or that wireless communication resources have been allocated in a particular subsequent reception time slot. This allows the downlink scheduling process and the uplink scheduling process to each be performed in consideration of parameters which can be regularly updated, thus helping to maintain a fair distribution of wireless communication resources between the terminals over time.

In some examples, the uplink scheduling circuitry is configured to provide the control signal to the downlink scheduling circuitry prior to the downlink scheduling circuitry performing each instance of the downlink scheduling process.

In this way, each performance of the downlink scheduling process can take into account the control signal, and the control signal can be updated regularly, further helping to maintain a fair distribution of resources over time.

In some examples, the uplink scheduling circuitry is configured to generate, as the control signal to influence the downlink scheduling process for the given transmission slot, a signal indicative of at least one factor to be considered by the uplink scheduling circuitry when performing the corresponding uplink scheduling process.

In this way, the downlink scheduling circuitry can be arranged to determine the downlink data allocations in dependence - at least in part - on the requirements of the uplink scheduling process. This in turn improves the likelihood that the terminals selected by the uplink scheduling circuitry during the corresponding uplink scheduling process are able to be notified of the relevant UCI in a transmission time slot, taking account of the wireless communication resources used in that transmission time slot, thereby improving the fairness of the uplink scheduling process. This is achieved by nudging the downlink scheduling process to make its selection of terminals and/or associated wireless communication resources to be used for downlink communication taking at least partly into account the uplink scheduling process that will subsequently be performed. This can be advantageous since, as noted above, only the terminals selected by the uplink circuitry that can be contacted given the wireless communication resources that are allocated for the downlink data allocations determined for the given transmission time slot are able to actually be allocated an uplink data allocation.

In some examples, the at least one factor comprises an uplink priority order of the terminals.

For example, the uplink priority order may indicate those terminals which have, so far, received a lower proportion of the available uplink communication resources, in which case performing the uplink scheduling process on the basis of the uplink priority order allows for a fairer (more evenly spread) allocation of resources to be achieved, provided the required UCI can be transmitted to the selected terminal during a transmission time slot. If that is not the case, then the terminal selected in accordance with the uplink priority order will not receive an uplink data allocation at that time, and this can over time lead to a distortion in allocation of uplink resources. However, by using the control signal to provide the downlink scheduling circuitry with information indicative of the uplink priority order, the chance of a terminal selected by the uplink scheduling circuitry being able to be notified of the required UCI, and hence be provided with an uplink data allocation, has been found to increase. It will be appreciated, however, that the above example is just one example of how the terminals may be prioritised in the uplink priority order. For example, there may additionally or instead by some terminals which are always high on the priority order, regardless of the amount of resources they are allocated. The uplink priority order may be indicated by a list stored in storage circuitry of the base station; however, the priority order may instead be indicated by an equation or other algorithm which can be calculated to determine the next highest priority terminal (e.g. the algorithm could be performed repeatedly to determine the priority order).

In some examples, the uplink scheduling circuitry is configured to update the uplink priority order each time the uplink scheduling process is performed.

In this way, the uplink priority order takes into account the uplink communication resources which have already been allocated in previous repetitions of the uplink scheduling process, thus helping to ensure that the resources are shared fairly amongst the terminals over time. The priority order is thus, in this example, not a fixed order.

In some examples the downlink scheduling circuitry is configured to perform the downlink scheduling process in dependence on a downlink priority order of the terminals and, each time the downlink scheduling process is performed, to update the downlink priority order based on the control signal provided by the uplink scheduling circuitry.

Like the uplink priority order discussed above, the downlink priority order may indicate those terminals which have, so far, received a lower proportion of the available downlink communication resources, and may be indicated by - for example - a list stored in storage circuitry of the base station or by an equation or other algorithm which can be calculated to determine the next highest priority terminal (e.g. the algorithm could be performed repeatedly to determine the priority order). In any case, updating the downlink priority order based on the control signal provides a simple and efficient mechanism for taking the control signal into account during the downlink scheduling process. For example, the downlink scheduling circuitry may move certain terminals to higher priority positions in the priority order on the basis of the control signal. If the priority order is defined by an equation or algorithm, the equation or algorithm may be adjusted based on the control signal.

In some examples, the base station comprises antenna circuitry that is operated by the wireless communications circuitry to support multiple beams, wherein the wireless communication resources allocated to each terminal comprise at least a selected beam.

Both downlink communication (e.g. transmitting downlink data to the plurality of terminals) and uplink communication (e.g. receiving uplink data from the plurality of terminals) may be performed using beams, and the antenna circuitry may be capable of supporting multiple beams at the same time, during both uplink communication and downlink communication. Hence, the uplink and downlink scheduling processes may include selecting, for each identified terminal, a beam that will be used by the identified terminal and the base station to communicate.

In some examples, the wireless communication circuitry is configured to transmit the downlink data to each terminal using the beam selected for that terminal, and each uplink data allocation indicates the beam selected to receive the uplink data transmitted by the identified terminal to the base station.

The beam selected for a given terminal may form part of the wireless communication resources allocated to that terminal during the uplink scheduling process, and the wireless communication resources in each downlink allocation may similarly specify the beam selected for downlink communication with that terminal. The wireless communication resources may further comprise additional information such as one or more resource blocks (RBs) or resource block groups (RBGs) to be used for communication (either downlink or uplink) between a given terminal and the base station, a modulation and coding scheme to be used, a transmit power to be used, and - for in the uplink allocations - an indication of the reception time slot during which the base station expects to receive uplink information from the given terminal.

In some examples, the multiple beams are shaped such that beams visible to any given terminal depend on a position of the given terminal.

For example, the beams may be directional, such that they target a given angular range (e.g. a number of degrees around a circle centred on the base station). By having narrower, directional beams as opposed to broadcasting information in all directions, the range of distances over which information can be communicated and the quality of the communication (e.g. the signal quality of received signals) is increased. This allows base stations to be spread further apart, and facilitates communication with terminals which are installed a long way from the base station (e.g. terminals may be installed in aircraft, which will typically be a long distance away from any ground-based base stations). In a particular example, the angular range covered by each beam may be fairly narrow (e.g. narrow beams may be used), in order to increase the range even further. However, there is a trade-off associate with using narrower, directional beams - only terminals within the angular range covered by the beam can communicate with the base station using that beam.

In some examples, during each transmission time slot, the wireless communications circuitry is limited to using a number of beams which is limited to a given number.

One might expect to be able to improve the throughput of downlink data transmitted between the terminals and the base station by simply providing more beams. For example, if the beams are directional as described in the example, one might expect that increasing the number of beams would allow a greater angular range to be covered, thus facilitating communication with more terminals at once. However, the number of beams that can be utilized at any given time may be restricted due to regulatory and/or hardware constraints - these restrictions may apply to one or both of the downlink and uplink beams (e.g. in one or both of the transmission and reception time slots). For example, the number of beams which can be used at a given time may be limited based on the capabilities of the antenna circuitry and the wireless communication circuitry. In addition (or instead), the number of beams may be restricted due to certain regulatory requirements. For example, some areas may require base stations to limit the number of downlink beams which are in use at any given time to some threshold number. In any case, when the number of beams which can be utilized during each transmission time slot is limited, the scheduling performed by the downlink scheduling circuitry becomes especially useful, by determining when and on which beam each terminal will receive downlink data and control information. In addition, the uplink scheduling process also becomes important, since the number of beams available during a given transmission time slot affects which terminals can receive the uplink control information. Hence, the inventors realised that systems in which the number of available beams is limited in this way would particularly benefit from implementation of the present technique.

In some examples, the uplink scheduling circuitry is configured to employ, as the corresponding uplink scheduling process, an uplink selection algorithm aimed at spreading uplink data allocations amongst the terminals in a defined way, and the downlink scheduling circuitry is configured to employ, as the downlink scheduling process, a downlink selection algorithm aimed at spreading downlink data allocations amongst the terminals in a defined way.

For example, the uplink selection algorithm and the downlink selection algorithm could each be specified in the form of an equation which is used to select the terminals to be included in the uplink/downlink data allocations.

In some examples, the downlink selection algorithm and the uplink scheduling algorithm each comprise a proportional fair scheduling algorithm.

This is a particular example of a scheduling algorithm which may be employed, and aims to spread the data allocations amongst the terminals in a fair and proportional manner.

In some examples, the uplink scheduling circuitry is configured to determine, for each terminal, an average uplink data rate experienced by that terminal during one or more reception time periods prior to the given transmission time slot, and the control signal provided to the downlink scheduling circuitry provides an indication of the average uplink data rate determined for each terminal.

In this way, the downlink scheduling process can prioritise allocating wireless resources to those terminals which have not, historically, been allocated as many wireless communication resources by the uplink scheduling circuitry. This can allow a more even distribution of resources between the terminals over time.

In some examples, the downlink scheduling circuitry is configured to incorporate the indication of the average uplink data rate for each terminal into a computation performed during the downlink scheduling process, and the indication of the average uplink data rate for each terminal is scaled by a cross-coupling weight in the computation.

For example, the cross-coupling weight may be a constant with a value that is greater than or equal to zero, which is multiplied by the average uplink data rate to adjust the effect that the average uplink data rate has on the downlink scheduling process. For example, the cross-coupling weight may be set to a small value (e.g. the cross-coupling weight may be set to a value less than or equal to 1, and more particularly may be set to a value less than or equal to 0.1) to reduce the effect of the average uplink data rate on the downlink scheduling process; this allows the spread of communication resources for uplink communication to be made fairer without significantly altering the spread of wireless communication resources used for downlink communication. The value of the cross-coupling weight may be the same for all terminals, or it may be different for different terminals.

In some examples, the downlink selection algorithm employed by the downlink scheduling circuitry comprises, for the given transmission time slot:

(i) identifying a selected terminal;
(ii) determining a downlink data allocation for the selected terminal; and
(iii) repeating steps (i) and (ii) until each terminal in the plurality of terminals has been considered.

For example, step (i) may involve taking the next terminal from a list of terminals - where a downlink priority order is employed, this may mean popping the top terminal from the priority list. Alternatively, the selected terminal may be determined by performing a calculation (e.g. an equation). Step (ii) may involve determining whether any suitable wireless resources are available for allocation to the selected terminal, and allocating those resources accordingly. On the other hand, if no suitable wireless resources are available, the selected terminal may not be allocated any resources - e.g. the downlink data allocation determined for the selected terminal may be empty. Alternatively, the downlink scheduling circuitry may be configured to only select terminals in step (i) for which there are available wireless resources - in this case, considering each terminal (e.g. in step (iii)) may mean determining whether or not to select each terminal and, for each terminal which is selected, performing step (ii).

In some examples, the downlink scheduling circuitry is configured to identify, as the selected terminal, a terminal which satisfies:

$$u_{\mathrm{PFS}}^{\mathrm{DL}} = \arg \max_{u \in \{1,2,\ldots,U\}} \frac{d_{u,n}^{\mathrm{DL}}}{r_{u,n}^{\mathrm{DL}} + \beta r_{u,n}^{\mathrm{UL}}}$$

$$(1)$$

wherein:

$u_{\mathrm{PFS}}^{\mathrm{DL}}$ is the selected terminal;

$d_{u,n}^{\mathrm{DL}}$ is a downlink data rate which can be achieved by terminal u in transmission time slot n;

$r_{u,n}^{\mathrm{DL}}$ is an average downlink data rate experienced by terminal u during one or more transmission time periods prior to transmission time slot n;

$r_{u,n}^{\mathrm{UL}}$ is an average uplink data rate experienced by terminal u during one or more reception time periods prior to transmission time slot n; and

$\beta$ is a cross-coupling weight.

In this example, the terminal selected in step (i) of the algorithm (identified as $u_{\mathrm{PFS}}^{\mathrm{DL}}$) is identified in consideration of, for each terminal, a comparison of the downlink data rate ($d^{\mathrm{DL}}$) that the base station and the selected terminal could achieve if that terminal were allocated wireless communication resources in the given transmission time slot, with the average data rate $r^{\mathrm{DL}}$ that that terminal has experienced over a given time period prior to the time at which the downlink scheduling process is being performed. In this particular example, an extra value is also included, which is the average uplink data rate $r^{\mathrm{UL}}$ experienced by each terminal (e.g. this may have been communicated to the downlink scheduling circuitry via the control signal) scaled by a cross-coupling weight $\beta$. This is an example of a proportional fair scheduling algorithm which has been modified to take into account, as the control signal, the average uplink data rate $r^{\mathrm{UL}}$. By including this additional term - $\beta r^{\mathrm{UL}}$ - the algorithm is adjusted to increase the likelihood that the selected terminal will be one which has historically experienced a lower uplink data rate, thus allowing a fairer spread of uplink data allocations to be determined by the uplink scheduling circuitry.

In some examples, the average uplink data rate and the average downlink data rate are calculated using moving average filters.

For example, each average data rate may be calculated according to the following equation, where $r_{u,n}$ is the average data rate (either uplink or downlink) for terminal u up until slot n, a is a constant and $A_{u,n-1}$ is a value indicative of the wireless communication resources allocated to terminal u in slot n-1 (e.g. this could be the number of bytes allocated during slot n-1), noting that the value of A could be zero if no resources were allocated to terminal u in slot n-1:

$$r_{u,n} = (1 - \alpha)\, r_{u,n-1} + \alpha\, A_{u,n-1}$$

$$(2)$$

In some examples, the wireless communications circuitry is configured, during a given transmission time slot, to employ the wireless communication resources identified by each downlink data allocation determined for that transmission time slot.

Hence, any downlink data transmitted during the given transmission time slot is transmitted to those terminals for which wireless communication resources were allocated.

In some examples, the base station is arranged for deployment in an air-to-ground (ATG) system, and each of the plurality of terminals are deployed in an aircraft.

Particular embodiments will now be described with reference to the figures.

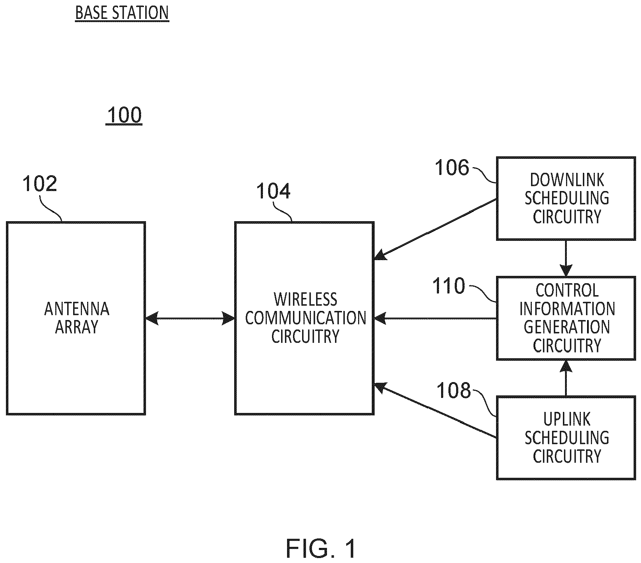

Figure 1 schematically illustrates a base station 100 configured for wireless communication with a plurality of terminals (not shown). The base station 100 includes an antenna array 102, which is arranged to generate a plurality of beams to transmit and receive signals from the plurality of terminals, under the control of wireless communication circuitry 104. In particular, the wireless communication circuitry 104 controls the antenna array 102 to transmit information (referred to as downlink information) to the plurality of terminals on one or more transmission beams, and to receive information (referred to as uplink information) transmitted by the plurality of terminals on one or more reception beams.

The transmission beams and reception beams are directional, so that they are only visible to terminals in a given direction (e.g. within a given angular range, the width of the range being dependent on how broad the beam is) - e.g. a transmission beam is considered to be "visible" to a given terminal if data transmitted using the transmission beam can be received by the terminal's antenna circuitry, and a reception beam is considered to be "visible" to the given terminal if the base station can receive data, transmitted by the terminal, on the reception beam. The number of beams which can be used at any given time by the antenna array may be limited based on hardware constraints associated with the specific circuitry of the base station 100, and/or due to certain regulatory constraints - for example, some jurisdictions may require that the number of transmission beams (downlink beams) in operation at any given time be limited to a certain number. In some cases, regulatory constraints may limit the number of beams further (e.g. to a lower number) than the hardware constraints.

The antenna array 102 is made up of a plurality of antenna elements, and the base station 100 may further comprise beamforming circuitry (not shown) to generate the one or more reception and transmission beams, and beam steering circuitry (not shown) to steer (e.g. rotate) the beams.

As will be discussed in more detail below, the wireless communication circuitry 104 controls the antenna array 102 to communicate with the plurality of terminals in predetermined time slots. In particular, the antenna array transmits downlink data to the one or more terminals in transmission time slots (also referred to as downlink slots or transmission slots) and does not transmit data during reception time slots (also referred to as uplink slots or reception slots), which are instead reserved for reception of information transmitted by the one or more terminals.

Accordingly, since both the number of beams that can operate at a given time and the time slots during which the base station can transmit or receive information are limited, there is a need to determine a schedule for when each of the plurality of terminals will transmit and receive data, and to determine the wireless communication resources (e.g. including which beam) to be employed for communication with each terminal. This is particularly the case when there are a large number of terminals in communication with a single base station, especially if these terminals are spread out such that they cannot all be reached by a limited number of beams.

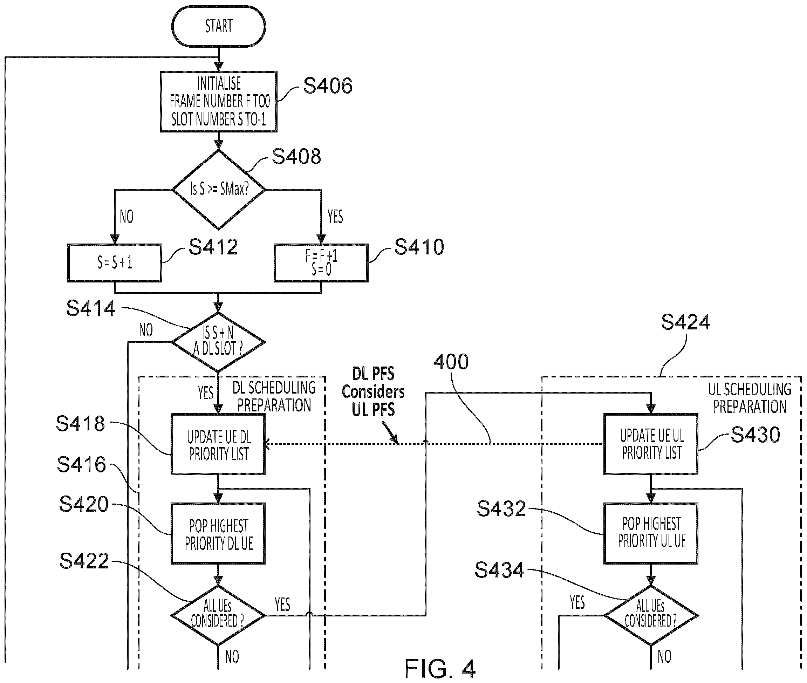

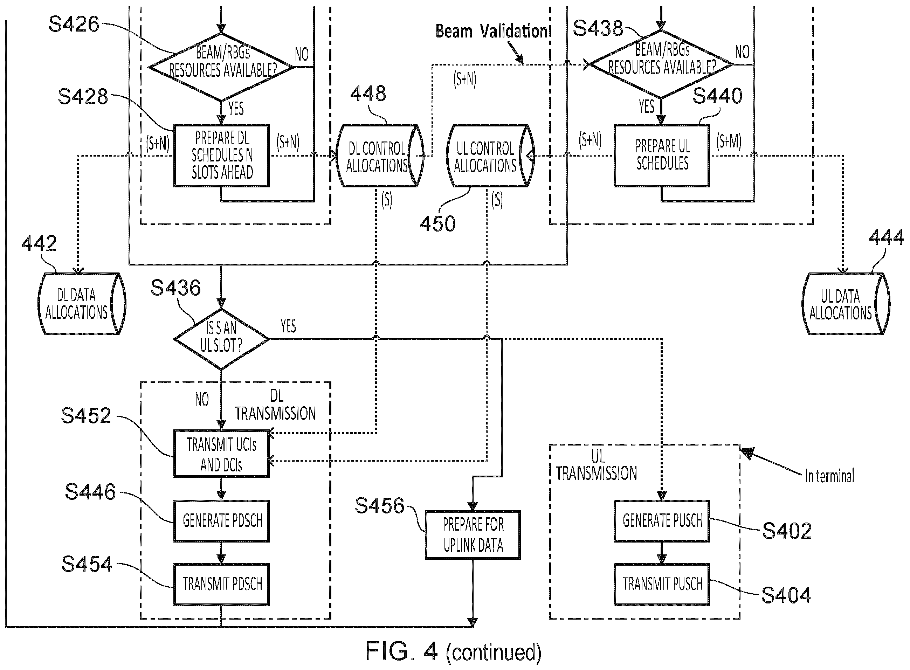

Hence, the base station 100 of Figure 1 also includes downlink scheduling circuitry 106 and uplink scheduling circuitry 108. The downlink scheduling circuitry 106 is arranged to perform a downlink scheduling process to determine downlink data allocations indicating, for a given downlink slot, which terminals the base station will transmit downlink data to and which wireless resources will be used to transmit the downlink data. Similarly, the uplink scheduling circuitry 108 is configured to perform an uplink scheduling process to determine uplink data allocations indicating, for one or more uplink slots subsequent to (e.g. later than) the given downlink slot, which terminals the base station expects to receive uplink information from, and which wireless resources it expects to be used. An example of a downlink scheduling process and an uplink scheduling process which may be employed by the uplink scheduling circuitry and the downlink scheduling circuitry are shown in Figure 4 (discussed below). It will be appreciated that, while the uplink scheduling circuitry 108 and the downlink scheduling circuitry 106 are shown in Figure 1 as being separate, it is also possible for a single set of scheduling circuitry to perform both the downlink scheduling process and the uplink scheduling process.

The downlink data allocations and the uplink data allocations are communicated to the terminals in the form of control information - in particular, the control information includes downlink control information (DCI) indicating the downlink data allocations and uplink control information (UCI) indicating the uplink data allocations. The control information - including both the DCI and the UCI - is generated by control information generation circuitry 110 and transmitted by the antenna array as part of the downlink data.

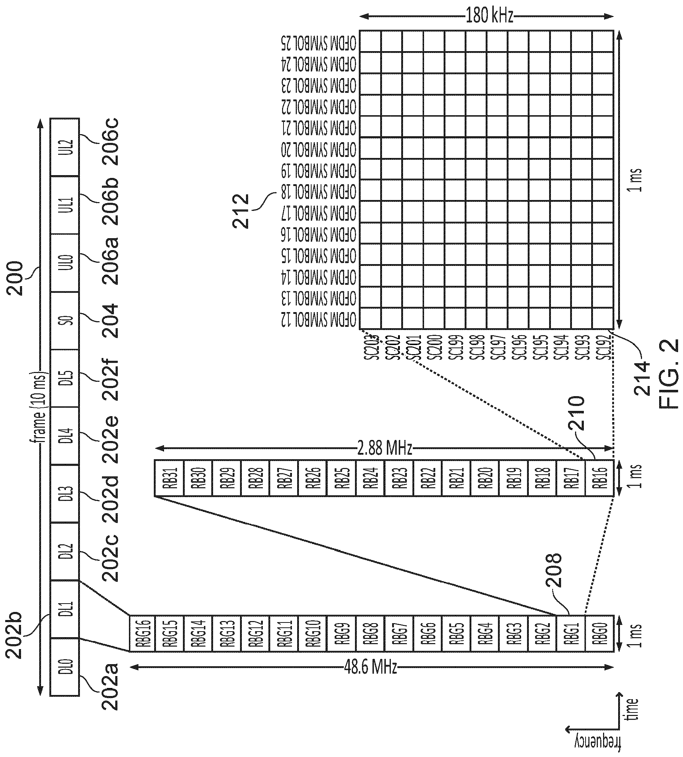

As noted above, the base station 100 is configured to communicate with the plurality of terminals in predetermined transmission time slots (downlink slots) and reception time slots (uplink slots). Figure 2 shows an example of how these time slots may be arranged within a time period referred to as a frame.

In the example of Figure 2, a frame 200 represents a 10ms time period and is divided into ten slots 202, 204, 206. In particular, the ten slots in this example comprise six downlink slots 202a-202f, three uplink slots 206a-206c and one special/reserved slot 204. The downlink slots represent periods of time during which downlink communication may be performed. In particular, the base station 100 is configured to transmit downlink data (also referred to as downlink information) to terminals during the downlink slots. On the other hand, the uplink slots represent periods of time during which uplink communication may be performed. In particular, the base station 100 is configured to receive uplink data (uplink information) from terminals during the uplink slots. The special/reserved slot S0 204 is used to provide some separation between downlink communication and uplink communication, and hence allow time for the wireless communication circuitry to reconfigure its operation between transmission and reception.

As shown in Figure 2, each slot - including both downlink slots 202 and uplink slots 206 - comprises seventeen resource block groups (RBGs) 208 in the frequency domain. Each RBG 208 represents a portion of the frequency range used by the base station to communicate with the plurality of terminals. In in the example of Figure 2, the total frequency range is 48.6 MHz, and each RBG 208 covers a portion of that range - in this particular example, the first 16 RBGs (RBG0 to RBG15) each cover 2.88 MHz, while the 17th RBG (RBG16) covers a range of 2.52 MHz. However, it will be appreciated that this is just one example of the frequency ranges that could be covered by each of the RBGs, and in other examples all RBGs may cover an equal portion of the frequency range. Each RBG 208 is, in turn, divided into resource blocks (RBs) 210 in the frequency domain, each covering a portion of the frequency range covered by the RBG 208 - in the example of Figure 2, each RBG 208 other than the last one comprises sixteen RBs 210 (the last one, RBG16, comprises 14 RBs), each of which covers a frequency range of 180 kHz. Finally, each RB 210 is further divided in both the time domain and the frequency domain. In particular, each RB 210 comprises fourteen OFDM (orthogonal frequency domain multiplexing) symbols 212 in the time domain and 12 subcarriers (SC) 214 in the frequency domain.

Different RBGs 208 within a single slot can be allocated for communication with different terminals if desired, and the wireless communication resources identified for each data allocation will indicate the RBGs allocated. It is also possible to allocate individual RBs 210 to different terminals - in which case the wireless communication resources identified for each data allocation will indicate the relevant RBs 210 allocated. Whilst each subcarrier/OFDM symbol unit (denoted by the individual squares in the right hand side of Figure 2) may carry separate items of information, an individual RB is the smallest addressable unit in time and frequency, and hence the smallest individually allocatable unit of the frequency spectrum is the resource block.

By using different beams, it is possible to allocate the same RBs or RBGs to multiple terminals within the same slot, with each of the terminals using a different beam. Indeed, in one example implementation, when making data allocations, all of the useable RBGs for a downlink data allocation or an uplink data allocation are allocated to the identified terminal for that data allocation, and the use of different beams allows more than one terminal to be communicated with in a particular slot.

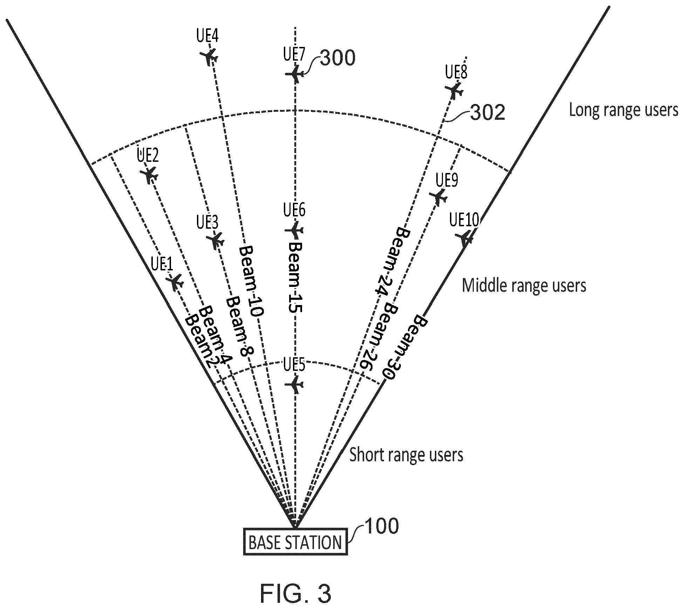

As discussed above, the base station 100 may employ multiple beams, each of which is directional (e.g. covers a limited angular range) to communicate with terminals in different directions at the same time. Figure 3 illustrates an example of how a base station 100 can communicate with a plurality of terminals 300 using a plurality of beams 302.

Figure 3 shows a base station 100 using eight beams 302 to communicate with multiple terminals 300 (also referred to as items of user equipment, UE). As mentioned earlier it may not be possible to use all of the beams at the same time, due to hardware and/or regulatory constraints. It will be appreciated that the number of beams shown in this example (eight) is just an example, and in practice the number of beams 302 employed will depend on multiple factors including the position of the base station 100, the number and positions of the terminals 300, hardware capabilities, etc. In addition, the number of beams 302 which can be used at any given time may - as mentioned above - be limited due to hardware and/or regulatory constraints, and this number may be either the same or different for uplink and downlink slots. In this particular example, each of the terminals 300 is installed on an aeroplane, however it will be appreciated that this is just one example situation in which the present technique could be employed, and other examples are also possible.

Figure 3 illustrates communication using a number of narrow (e.g. covering a narrow angular range), directional beams; however, it will be appreciated that the dotted lines shown for each beam represent the boresight direction, and not necessarily the entire angular range covered by each beam. As shown in Figure 3, even though each of the beams 302 is fairly narrow - for example, Figure 3 shows an example where the terminals 300 are installed on aeroplanes, for which narrow beams which can be used to reliably transmit and receive data over long distances may be particularly useful - it is possible for multiple terminals 300 to be present along the path of a single beam 302. For example, terminals UE5, UE6 and UE7 are all present along the path of beam 15. If different resources within the beam are allocated to each of the terminals, it is possible for the base station 100 to communicate with all of the terminals along the path of the beam at the same time. Alternatively, those terminals that use the same beam may be communicated with in different time slots.

However, since the number of beams that can be used by the base station 100 at any given time is limited, the base station 100 may not be able to communicate with all of the terminals in the area at a given time.

In addition, for some of the terminals 300, there may be restrictions in terms of which time slots can be used for uplink communication between those terminals and the base station. For example, the terminal identified in Figure 3 as a "short range user" (where a "user" is to be interpreted as referring to an individual terminal) - UE5 - may be close enough that it can be allocated any of the uplink time slots UL0, UL1 or UL2 since the round-trip delay is short enough that any data it transmits will be received by the base station within whichever of those uplink time slots has been allocated. However, for the "middle range users" - UE1, UE2, UE3, UE6, UE9 and UE10 - those terminals may be far enough away that if they were allocated the time slot UL0, the round-trip delay may be sufficient that any data they transmitted may not be received by the base station in time to be received within that time slot UL0. Hence the base station may be constrained to only allocate such terminals either the uplink time slot UL1 or the uplink time slot UL2. Similarly, for any "long-range users" - UE4, UE7 or UE8 - such terminals may only be allocated the uplink time slot UL2, in order to allow (having regard to the round-trip delay) sufficient time for data to be transmitted from such terminals in time to be received by the base station in the allocated time slot.

Hence, in order to maintain a fair distribution of available communication resources between all of the terminals 300 despite these constraints, it is advantageous for downlink scheduling circuitry and uplink scheduling circuitry to be provided, to perform corresponding downlink and uplink scheduling processes.

Figure 4 is a flow diagram illustrating an example of a method according to the present technique. All of the steps in Figure 4 take place in the base station 100, except for steps S402 and S404 which take place in a terminal.

As shown in Figure 4, the method comprises a step S406 of initialising a frame number, F, to 0 and a slot number, S, to -1. The method also comprises a step S408 of determining whether the slot number, S, is greater than or equal to the maximum number of slots per frame SMax (e.g. in the example of Figure 2, SMax=10). This step is a check of whether the current slot S is in the same frame as the previous slot considered by the method; when S is greater than or equal to SMax (S >= SMax), this indicates that S is in the next frame, whereas when S is less than SMax (S < SMax) this indicates that S is in the same frame as the previously considered slot. Hence, when S is greater than or equal to SMax ("YES"), the method proceeds to a step S410 of setting the value of F to F+1 (e.g. incrementing the value of F by 1) and setting the value of S to 0 - this advances the calculation to the first slot (S=0) of the next frame. On the other hand, when S is less than SMax ("NO"), the value of F is not changed, but the value of S is incremented S412 by 1 (e.g. the value of S is updated to S+1).

Once the values of S and F have been determined (e.g. once they have - where necessary - been updated, either in step S412 or step S410), it is determined S414 whether the slot identified by S + N (e.g. a slot N slots ahead of slot S) is a downlink slot. N is a constant, and is defined such that the downlink scheduling process and the uplink scheduling process are performed a number of slots ahead of the slot in which the DCI and UCI will be transmitted. The value of N is implementation dependent, but in one example N could be set to 5.

If it is determined that slot S + N is a downlink slot ("YES"), a downlink scheduling process (also referred to as a DL scheduling preparation) S416 is performed by the downlink scheduling circuitry of the base station to determine the downlink data allocations (e.g. identifying terminals to which downlink data is to be transmitted during slot S + N and wireless communication resources to be used by the base station to transmit the downlink data) for slot S + N. The downlink scheduling process S416 comprises a step S418 of updating a downlink priority list which is used to determine the order in which the terminals should be considered by the downlink scheduling circuitry. The downlink priority list is updated each time the downlink scheduling process S416 is performed, and may be updated based on, for example, the average data rate experienced by each of the terminals during downlink communication in previous downlink slots. The downlink priority list is also updated based on a control signal 400 generated by the uplink scheduling circuitry. This allows the control signal - which may be indicative of at least one factor to be considered during a corresponding uplink scheduling process - to influence the downlink scheduling process, in order to adjust the downlink data allocations in a way that enables a fairer distribution of resources to be determined during the corresponding uplink scheduling process. In this example, the control signal is indicative of an uplink priority list used to determine the order in which the terminals should be considered by the uplink scheduling circuitry.

The downlink priority list can be determined in a variety of ways. In one example implementation, it is determined using an equation that can calculate the highest priority terminal. For example, an equation such as equation (1) above, which represents a modified proportional fair scheduling (PFS) algorithm, may be used. In this example, the control signal 400 may indicate the average uplink data rate $r_{u,n}^{\mathrm{UL}}$ for each terminal u in slot n=S+N.

If U is the number of active terminals in the system, then the proportionally fair scheduling mechanism can identify a terminal that maximises the above metric. By repeated use of this equation, a list can be established at step S418 indicating the relative priority of each of the terminals. For example, after each iteration of the equation, any terminal that has already been selected (e.g. following a previous iteration of the equation in the same slot) may be excluded from the calculation, so that each iteration identifies the next highest priority terminal. An alternative approach could be to use a sorting algorithm to evaluate a function (e.g. that defined by equation 1) for all of the terminals and sort them into a priority list; the next highest priority terminal could then be popped from the top of the priority list. Whichever approach is used, in the next slot all terminals are considered again (e.g. regardless of whether or not they were selected in a previous slot).

Once the downlink priority list has been updated, the highest priority terminal (UE) in the downlink priority list is popped/selected at step S420. For example this could be the terminal at the top of the priority list. It is then determined S422 whether all terminals have been considered, which will for example be the case if when performing step S420 it was determined that there were no more terminals to pop. If there are no more terminals to consider ("YES"), the downlink scheduling process ends, and the method proceeds to the uplink scheduling process S424 (discussed below). On the other hand, if there are more terminals to consider ("NO"), it is determined S426 whether there are any suitable wireless communication resources (e.g. beams, RBGs, etc.) available for allocation to the terminal popped in step S420. If there are resources available ("YES"), the method comprises a step S428 of determining a downlink data allocation for that terminal by allocating wireless communication resources (including, for example, a selected beam and, if appropriate, selected RBGs within the beam) to the selected terminal, and storing the downlink data allocation for slot S+N at step S442, before returning to the step S420 of popping the (next) highest priority terminal. On the other hand if, at step S426, it is determined that no resources are available for allocating to the selected terminal (for example because the wireless communication resources that would be needed have already been allocated to another terminal (e.g. if another terminal using the same beam has been allocated all the RGBs) or cannot be provided given the wireless communication resources allocated to other terminals (e.g. if the maximum number of beams have already been used for earlier allocations)), step S428 is skipped and the method returns to step S420 (e.g. the next highest terminal is popped).

As noted above, once all of the terminals have been considered in the downlink scheduling process, S416 - e.g. once the result of step S422 is "YES" - a corresponding uplink scheduling process S424 is performed by the uplink scheduling circuitry, in order to determine the uplink data allocations (e.g. identifying terminals from which the base station expects to receive uplink data, and the wireless communication resources to be used by the identified terminals to transmit the uplink data) for the future uplink slots in the frame. In one example all three possible uplink slots are considered each time the uplink scheduling process is performed and each time an uplink data allocation is determined it will be for an identified one of those future uplink slots, namely slot S + M (where M > N and identifies the particular uplink slot the uplink data allocation relates to). The uplink scheduling process S424 follows a similar pattern to the downlink scheduling process S416. In particular, the uplink scheduling process comprises a step S430 of updating a priority list - in this case, it is the uplink priority list that is updated - and a step S432 of popping the highest priority terminal from the uplink priority list. Like the downlink priority order, the uplink priority list could be determined by using an equation to determine the highest priority terminal. For example, an equation such as the following, which represents a proportional fair scheduling (PFS) algorithm, may be used:

$$u_{\mathrm{PFS}}^{\mathrm{UL}} = \arg \max_{u \in \{1,2,...,U\}} \frac{d_{u,n}^{\mathrm{UL}}}{r_{u,n}^{\mathrm{UL}}}$$

$$( 3 )$$

Once a terminal has been popped (e.g. selected) from the priority list, it is determined S434 whether all terminals have been considered (e.g. if there was no terminal left to pop at step S432). If there are no more terminals to be considered ("YES"), the method proceeds straight to step S436 (discussed below). On the other hand, if there are still terminals left to be considered ("NO"), it is determined S438 whether there are any wireless communication resources (e.g. beams, RBGs, etc.) available for allocation to the terminal popped in step S432. In one example implementation, all three possible uplink slots are considered each time the uplink scheduling process S424 is performed, and hence the wireless communication resources considered at step S438 are those wireless communication resources available across all three uplink slots. In an alternative implementation, the uplink scheduling process S424 can be repeated sequentially, once for each uplink slot, and hence during any such iteration the wireless communication resources considered at step S438 are those associated with the current UL slot under consideration.

Following step S438, if there are resources available ("YES"), the method comprises a step S440 of determining an uplink data allocation for the selected terminal by allocating wireless communication resources (including, for example, a selected beam and, if appropriate, selected RBGs within the beam) to the selected terminal, and storing that uplink data allocation at step S444, before returning to the step S432 of popping the (next) highest priority terminal. On the other hand if, at step S438, it is determined that no resources are available for allocating to the selected terminal (for example because the wireless communication resources that would be needed have already been allocated to another terminal (e.g. if another terminal using the same beam has been allocated all the RGBs) or cannot be provided given the wireless communication resources allocated to other terminals (e.g. if the maximum number of beams have already been used for earlier allocations)), step S440 is skipped and the method returns to step S432.

As discussed above with reference to Figure 1, the base station comprises control information generation circuitry 110 which is arranged to generate, for transmission in a given transmission time slot (in the example shown in Figure 4 this being slot S+N) downlink control information (DCI) identifying one or more downlink data allocations, and this DCI information is shown schematically in Figure 4 by the element 448. In one particular embodiment, the downlink control information will provide information identifying the downlink data allocations 442 for slot S+N.

The control information generation circuitry 110 is also arranged to perform at step S440 the UCI computation step to determine the uplink control information 450 to be provided in transmission slot S+N, and this UCI information is shown schematically in Figure 4 by the element 450.

Once all terminals have been considered during the uplink scheduling process (e.g. the yes path from step S434), or if the no path is followed from the earlier step S414 because it is determined that slot S+N is not a downlink slot (and hence no scheduling operation needs to be performed), the process proceeds to step S436. Here the slot S is considered (e.g. the actual current slot being utilised by the wireless communication circuitry 104 and associated antenna array 102). If slot S is determined to be a downlink slot at step S436 ("NO"), then the process proceeds to step S452 where the UCI and DCI information is transmitted that has previously been computed for inclusion in slot S. In one example implementation this will include the DCI for slot S and the UCI for one or more of the subsequent uplink slots of the frame. This control information is typically the first data transmitted in a given downlink slot, and in one particular example occupies the first few OFDM symbols. In one example implementation, any terminal that is able to receive the downlink transmission is arranged to scan the first few OFDM symbols to determine whether any DCI or UCI information has been included for it.

At step S446, a Physical Downlink Shared Channel (PDSCH) is generated for the transmission slot, to prepare the data that is to be transmitted to each of the terminals identified by the earlier computed downlink data allocations 442, using the specific wireless communication resources specified for each downlink data allocation. This generated PDSCH is then transmitted at step S454, causing the relevant data to be transmitted to each of the terminals identified by the downlink data allocations for the transmission slot S.

If at step S436 it is determined that slot S is an uplink slot ("YES"), then the process proceeds to step S456 where the base station prepares itself for the reception of uplink data. As shown schematically by the dotted box entitled "UL transmission", steps will also be undertaken by a terminal that has previously received uplink control information in an earlier transmission slot of the frame identifying that it has been allocated wireless communication resources to transmit data in the uplink slot S. In particular, the terminal will generate at step S402 a Physical Uplink Shared Channel (PUSCH) identifying the data to be transmitted, using the specific wireless communication resources specified for the associated uplink data allocation. This generated PUSCH is then transmitted at step S404, causing the relevant data to be transmitted from the terminal to the base station. Steps S402 and S404 will be repeated for each terminal that has been allocated uplink data allocation in the uplink slot S, as indicated by UCI information received in an earlier transmission slot of the frame.

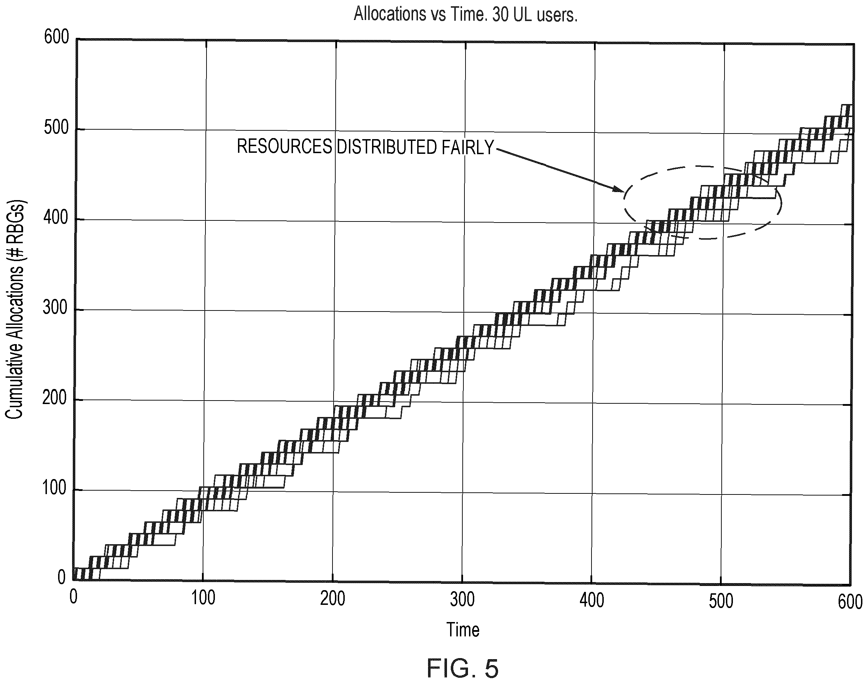

The method of Figure 4 allows wireless communication resources to be shared amongst the terminals more fairly, as shown by the graph in Figure 5. The graph in Figure 5 shows, along the y-axis, the cumulative number of RBGs allocated for uplink communication and, along the x-axis, time (in frames). Each line plotted on the graph represents one of the terminals in communication with the base station, and the graph shows that when the downlink and uplink data allocations are determined according to the method of Figure 4 the RBGs used for uplink can be distributed amongst the terminals in approximately equal proportions.

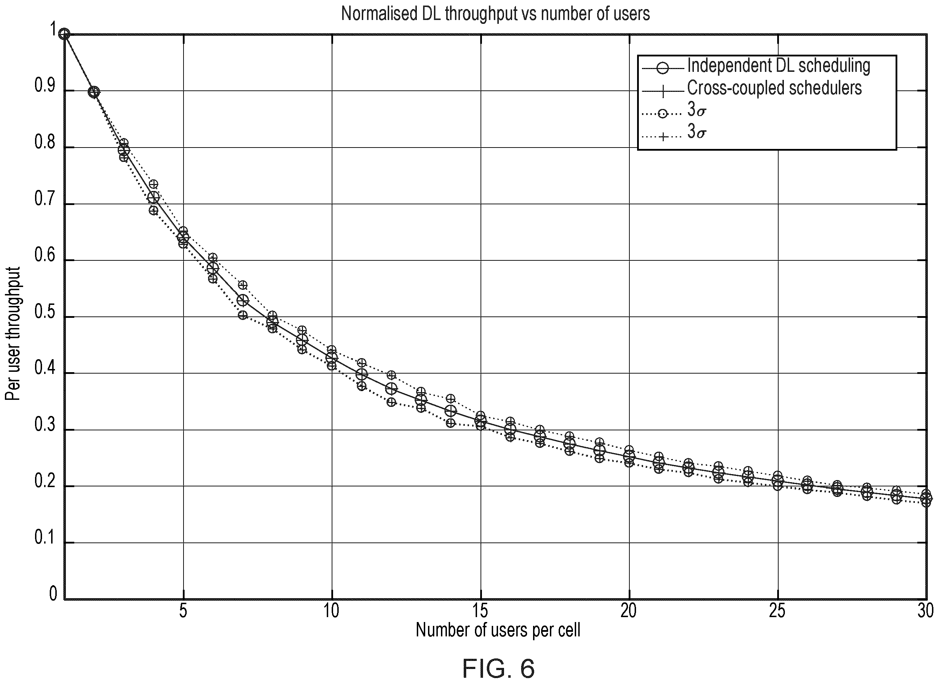

Moreover, as shown in Figure 6, this advantage can be achieved without significantly affecting the overall throughput of downlink data. In particular, Figure 6 shows the normalised downlink data throughput per user (terminal) versus the number of users (terminals) in a cell when downlink scheduling is performed independently of uplink scheduling (e.g. when the control signal described above is not provided) and when the downlink and uplink schedulers are cross-coupled (e.g. when the control signal is provided). As shown in the graph, the downlink throughput per user is unaffected (within error) by the performance of the process in Figure 4. Hence, uplink scheduling can be significantly improved by using the above method, without impairing downlink scheduling.

It will be appreciated that the method shown in Figure 4 is just one example implementation of the present technique, and many of the steps of the flow diagram could be omitted, reordered or changed and the benefits of improved uplink scheduling without impairing downlink scheduling can still be achieved. In particular, the distribution of uplink resources amongst the terminals is improved by providing a control signal between the uplink scheduling circuitry and the downlink scheduling circuitry which influences the downlink scheduling process. This also allows the uplink scheduling process and the downlink scheduling process to remain largely independent, rather than combining the uplink and downlink scheduling processes (e.g. performing the processes concurrently), which would add complexity and, therefore, increase costs and decrease efficiency.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative embodiments of the invention have been described in detail herein with reference to the accompanying drawings, it is to be understood that the invention is not limited to those precise embodiments, and that various changes and modifications can be effected therein by one skilled in the art without departing from the scope of the invention as defined by the appended claims.

Other aspects and features of the invention are set out in the following numbered clauses:

1. A base station for wireless communication with a plurality of terminals, the base station comprising:

wireless communication circuitry configured, during transmission time slots allocated for transmission, to transmit downlink data for reception by one or more of the terminals, and further configured, during reception time slots allocated for reception, to receive uplink data transmitted by one or more of the terminals;

downlink scheduling circuitry configured to perform a downlink scheduling process for each transmission time slot, wherein the downlink scheduling process comprises, for a given transmission slot, determining one or more downlink data allocations, each downlink data allocation identifying a terminal to which downlink data is to be transmitted in the given transmission time slot and, for each identified terminal, wireless communication resources to be used by the wireless communication circuitry during the given transmission time slot to transmit the downlink data to the identified terminal;

uplink scheduling circuitry configured, once the downlink scheduling process for the given transmission time slot has been performed, to perform a corresponding uplink scheduling process comprising, for one or more reception time slots subsequent to the given transmission time slot, determining one or more uplink data allocations, each uplink data allocation identifying a terminal which is allocated to transmit uplink data within the one or more reception time slots and, for each identified terminal, the wireless communication resources to be used for that identified terminal during the one or more reception time slots; and

control information generation circuitry to generate, for transmission in the given transmission time slot, downlink control information identifying the one or more downlink data allocations determined for the given transmission time slot, and uplink control information identifying the one or more uplink data allocations determined for the one or more reception time slots subsequent to the given transmission time slot;

wherein the uplink scheduling circuitry is constrained, when performing the corresponding uplink scheduling process, to determine the uplink data allocations so that the terminal associated with each uplink data allocation will be able to receive the uplink control information, given the wireless communication resources to be employed by the wireless communication circuitry during the given transmission time slot; and

wherein the uplink scheduling circuitry is configured to provide, to the downlink scheduling circuitry, a control signal to influence the downlink scheduling process for each transmission time slot.

2. The base station of clause 1, comprising
antenna circuitry that is operated by the wireless communications circuitry to support multiple beams, wherein the wireless communication resources allocated to each terminal comprise at least a selected beam.

3. The base station of clause 2, wherein
the wireless communications circuitry is configured to transmit the downlink data to each terminal using the beam selected for that terminal, and each uplink data allocation indicates the beam selected to receive the uplink data transmitted by the identified terminal to the base station.

4. The base station of clause 2 or clause 3, wherein
the multiple beams are shaped such that beams visible to any given terminal depend on a position of the given terminal.

5. The base station of any of clauses 2 to 4, wherein
during each transmission time slot, the wireless communications circuitry is limited to using a number of beams which is limited to a given number.

6. The base station of any preceding clause, wherein:

the uplink scheduling circuitry is configured to employ, as the corresponding uplink scheduling process, an uplink selection algorithm aimed at spreading uplink data allocations amongst the terminals in a defined way; and

the downlink scheduling circuitry is configured to employ, as the downlink scheduling process, a downlink selection algorithm aimed at spreading downlink data allocations amongst the terminals in a defined way.

7. The base station of clause 6, wherein
the downlink selection algorithm and the uplink scheduling algorithm each comprise a proportional fair scheduling algorithm.

8. The base station of clause 6 or clause 7, wherein

the uplink scheduling circuitry is configured to determine, for each terminal, an average uplink data rate experienced by that terminal during one or more reception time periods prior to the given transmission time slot; and the control signal provided to the downlink scheduling circuitry provides an indication of the average uplink data rate determined for each terminal.

9. The base station of clause 8, wherein:

the downlink scheduling circuitry is configured to incorporate the indication of the average uplink data rate for each terminal into a computation performed during the downlink scheduling process; and
the indication of the average uplink data rate for each terminal is scaled by a cross-coupling weight in the computation.

10. The base station of any of clauses 6 to 9, wherein the downlink selection algorithm employed by the downlink scheduling circuitry comprises, for the given transmission time slot:

(i) identifying a selected terminal;
(ii) determining a downlink data allocation for the selected terminal; and
(iii) repeating steps (i) and (ii) until each terminal in the plurality of terminals has been considered.

11. The base station of clause 10, wherein
the downlink scheduling circuitry is configured to identify, as the selected terminal, a terminal which satisfies

$$u_{\text{PFS}}^{\text{DL}} = \arg \max_{u \in \{1,2,\dots,U\}} \frac{d_{u,n}^{\text{DL}}}{r_{u,n}^{\text{DL}} + \beta r_{u,n}^{\text{UL}}} \ ,$$

wherein:

$u_{\text{PFS}}^{\text{DL}}$ is the selected terminal;

$d_{u,n}^{\text{DL}}$ is a downlink data rate which can be achieved by terminal u in transmission time slot n;

$r_{u,n}^{\text{DL}}$ is an average downlink data rate experienced by terminal u during one or more transmission time periods prior to transmission time slot n;

$r_{u,n}^{\text{UL}}$ is an average uplink data rate experienced by terminal u during one or more reception time periods prior to transmission time slot n; and

$\beta$ is a cross-coupling weight.

12. The base station of clause 11, wherein
the average uplink data rate and the average downlink data rate are calculated using moving average filters.
13. The base station of any preceding clause, wherein
the wireless communications circuitry is configured, during a given transmission time slot, to employ the wireless communication resources identified by each downlink data allocation determined for that transmission time slot.
14. The base station of any preceding clause, wherein
the base station is arranged for deployment in an air-to-ground (ATG) system, and each of the plurality of terminals are deployed in an aircraft.

## Claims

1.  A base station for wireless communication with a plurality of terminals, the base station comprising:

wireless communication circuitry configured, during transmission time slots allocated for transmission, to transmit downlink data for reception by one or more of the terminals, and further configured, during reception time slots allocated for reception, to receive uplink data transmitted by one or more of the terminals;
downlink scheduling circuitry configured to perform a downlink scheduling process for each transmission time slot, wherein the downlink scheduling process comprises, for a given transmission slot, determining one or more downlink data allocations, each downlink data allocation identifying a terminal to which downlink data is to be transmitted in the given transmission time slot and, for each identified terminal, wireless communication resources to be used by the wireless communication circuitry during the given transmission time slot to transmit the downlink data to the identified terminal;

uplink scheduling circuitry configured, once the downlink scheduling process for the given transmission time slot has been performed, to perform a corresponding uplink scheduling process comprising, for one or more reception time slots subsequent to the given transmission time slot, determining one or more uplink data allocations, each uplink data allocation identifying a terminal which is allocated to transmit uplink data within the one or more reception time slots and, for each identified terminal, the wireless communication resources to be used for that identified terminal during the one or more reception time slots; and

control information generation circuitry to generate, for transmission in the given transmission time slot, downlink control information identifying the one or more downlink data allocations determined for the given transmission time slot, and uplink control information identifying the one or more uplink data allocations determined for the one or more reception time slots subsequent to the given transmission time slot;

wherein the uplink scheduling circuitry is constrained, when performing the corresponding uplink scheduling process, to determine the uplink data allocations so that the terminal associated with each uplink data allocation will be able to receive the uplink control information, given the wireless communication resources to be employed by the wireless communication circuitry during the given transmission time slot; and

wherein the uplink scheduling circuitry is configured to provide, to the downlink scheduling circuitry, a control signal to influence the downlink scheduling process for each transmission time slot.

2. The base station of claim 1, wherein:

the downlink scheduling circuitry is configured to repeat the downlink scheduling process for each transmission time slot; and

the uplink scheduling circuitry is configured to perform the corresponding uplink scheduling process after each repetition of the downlink scheduling process.

3. The base station of claim 2, wherein
the uplink scheduling circuitry is configured to provide the control signal to the downlink scheduling circuitry prior to the downlink scheduling circuitry performing each instance of the downlink scheduling process.

4. The base station of any preceding claim, wherein
the uplink scheduling circuitry is configured to generate, as the control signal to influence the downlink scheduling process for the given transmission slot, a signal indicative of at least one factor to be considered by the uplink scheduling circuitry when performing the corresponding uplink scheduling process.

5. The base station of claim 4, wherein
the at least one factor comprises an uplink priority order of the terminals.

6. The base station of claim 5, wherein
the uplink scheduling circuitry is configured to update the uplink priority order each time the uplink scheduling process is performed.

7. The base station of any preceding claim, wherein
the downlink scheduling circuitry is configured to perform the downlink scheduling process in dependence on a downlink priority order of the terminals and, each time the downlink scheduling process is performed, to update the downlink priority order based on the control signal provided by the uplink scheduling circuitry.

8. The base station of any preceding claim, comprising
antenna circuitry that is operated by the wireless communications circuitry to support multiple beams, wherein the wireless communication resources allocated to each terminal comprise at least a selected beam.

9. The base station of claim 8, wherein
the wireless communications circuitry is configured to transmit the downlink data to each terminal using the beam selected for that terminal, and each uplink data allocation indicates the beam selected to receive the uplink data transmitted by the identified terminal to the base station.

10. The base station of any preceding claim, wherein:

the uplink scheduling circuitry is configured to employ, as the corresponding uplink scheduling process, an uplink selection algorithm aimed at spreading uplink data allocations amongst the terminals in a defined way; and the downlink scheduling circuitry is configured to employ, as the downlink scheduling process, a downlink selection algorithm aimed at spreading downlink data allocations amongst the terminals in a defined way.

11. The base station of claim 10, wherein

the uplink scheduling circuitry is configured to determine, for each terminal, an average uplink data rate experienced by that terminal during one or more reception time periods prior to the given transmission time slot; and the control signal provided to the downlink scheduling circuitry provides an indication of the average uplink data rate determined for each terminal.

12. The base station of claim 11, wherein:

the downlink scheduling circuitry is configured to incorporate the indication of the average uplink data rate for each terminal into a computation performed during the downlink scheduling process; and the indication of the average uplink data rate for each terminal is scaled by a cross-coupling weight in the computation.

13. The base station of any of claims 10 to 12, wherein the downlink selection algorithm employed by the downlink scheduling circuitry comprises, for the given transmission time slot:

(i) identifying a selected terminal;
(ii) determining a downlink data allocation for the selected terminal; and
(iii) repeating steps (i) and (ii) until each terminal in the plurality of terminals has been considered.

14. The base station of claim 13, wherein
the downlink scheduling circuitry is configured to identify, as the selected terminal, a terminal which satisfies

$$u_{\mathrm{PFS}}^{\mathrm{DL}} = \arg \max_{u \in \{1,2,\ldots,U\}} \frac{d_{u,n}^{\mathrm{DL}}}{r_{u,n}^{\mathrm{DL}} + \beta \, r_{u,n}^{\mathrm{UL}}} \ ,$$

wherein:

$u_{\mathrm{PFS}}^{\mathrm{DL}}$ is the selected terminal;

$d_{u,n}^{\mathrm{DL}}$ is a downlink data rate which can be achieved by terminal u in transmission time slot n;

$r_{u,n}^{\mathrm{DL}}$ is an average downlink data rate experienced by terminal u during one or more transmission time periods prior to transmission time slot n;

$r_{u,n}^{\mathrm{UL}}$ is an average uplink data rate experienced by terminal u during one or more reception time periods prior to transmission time slot n; and

$\beta$ is a cross-coupling weight.

15. A method of operating a base station for wireless communication with a plurality of terminals, the method comprising:

during transmission time slots allocated for transmission, transmitting downlink data for reception by one or more of the terminals;
during reception time slots allocated for reception, receiving uplink data transmitted by one or more of the terminals;
performing, using downlink scheduling circuitry, a downlink scheduling process for each transmission time slot, wherein the downlink scheduling process comprises, for a given transmission slot, determining one or more downlink data allocations, each downlink data allocation identifying a terminal to which downlink data is to be transmitted in the given transmission time slot and, for each identified terminal, wireless communication resources to be used during the given transmission time slot to transmit the downlink data to the identified terminal;
once the downlink scheduling process for the given transmission time slot has been performed, performing, using uplink scheduling circuitry, a corresponding uplink scheduling process comprising, for one or more reception time slots subsequent to the given transmission time slot, determining one or more uplink data allocations, each uplink data allocation identifying a terminal which is allocated to transmit uplink data within the one or more reception time slots and, for each identified terminal, the wireless communication resources to be used for that identified terminal during the one or more reception time slots; and

generating, for transmission in the given transmission time slot, downlink control information identifying the one or more downlink data allocations determined for the given transmission time slot, and uplink control information identifying the one or more uplink data allocations determined for the one or more reception time slots subsequent to the given transmission time slot;

wherein during the corresponding uplink scheduling process, the determination of the uplink data allocations is constrained so that the terminal associated with each uplink data allocation will be able to receive the uplink control information, given the wireless communication resources to be employed during the given transmission time slot; and

wherein the method further comprises the uplink scheduling circuitry providing, to the downlink scheduling circuitry, a control signal to influence the downlink scheduling process for each transmission time slot.

BASE STATION

100

102
ANTENNA ARRAY

104
WIRELESS COMMUNICATION CIRCUITRY

106
DOWNLINK SCHEDULING CIRCUITRY

110
CONTROL INFORMATION GENERATION CIRCUITRY

108
UPLINK SCHEDULING CIRCUITRY

FIG. 1

FIG. 2

EP 4 213 573 A1

EP 4 213 573 A1

FIG. 3

21

START

INITIALISE
FRAME NUMBER F TO0
SLOT NUMBER S TO-1 —— S406

Is S >= SMax? —— S408

NO ← → YES

S = S + 1 —— S412

F = F+1
S = 0 —— S410

S414 —— IS S + N
A DL SLOT ?

NO

YES

DL PFS
Considers
UL PFS

400

S424

DL SCHEDULING
PREPARATION

UL SCHEDULING
PREPARATION

S418 —— UPDATE UE DL
PRIORITY LIST

UPDATE UE UL
PRIORITY LIST —— S430

S416

S420 —— POP HIGHEST
PRIORITY DL UE

S432 —— POP HIGHEST
PRIORITY UL UE

S422 —— ALL UEs
CONSIDERED ?

YES

S434 —— ALL UEs
CONSIDERED ?

YES

NO

NO

FIG. 4

FIG. 4 (continued)

Allocations vs Time. 30 UL users.

FIG. 5

EP 4 213 573 A1

Normalised DL throughput vs number of users

FIG. 6

Europäisches
Patentamt

European
Patent Office

Office européen
des brevets

# EUROPEAN SEARCH REPORT

**Application Number**

EP 22 21 3963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/213817 A1 (PARK CHI-HYUN [KR] ET AL) 27 August 2009 (2009-08-27) | 1-6, 8-10,13, 15 | INV. H04W72/50 |
| Y A | * paragraphs [0035], [0036], [0048], [0069]; figures 2,6 * | 7 11,12,14 | ADD. H04W72/566 H04W72/121 |
| Y A | US 2009/303970 A1 (KIKUCHI TOORU [JP]) 10 December 2009 (2009-12-10) * paragraphs [0087] - [0106] * | 7 1-6,8-15 | |
| A | EP 2 056 505 A1 (MITSUBISHI ELECTRIC CORP [JP]) 6 May 2009 (2009-05-06) * paragraphs [0050], [0092]; figures 2,6 * | 1-15 | |
| A | US 2019/191440 A1 (WANG JIBING [US] ET AL) 20 June 2019 (2019-06-20) * paragraphs [0052] - [0054], [0065], [0087] - [0104] * | 1-15 | |
| A | EP 2 439 998 A1 (NEC CORP [JP]) 11 April 2012 (2012-04-11) * paragraphs [0008], [0011] - [0012]; figures 1,4 * | 1-15 | TECHNICAL FIELDS SEARCHED (IPC) H04W |

The present search report has been drawn up for all claims

| Place of search | Date of completion of the search | Examiner |
|---|---|---|
| The Hague | 4 May 2023 | Schut, Gerhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 3963

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2023

| Patent document cited in search report | | | Publication date | Patent family member(s) | | | Publication date |
|---|---|---|---|---|---|---|---|
| US 2009213817 | A1 | | 27-08-2009 | KR | 20090085341 | A | 07-08-2009 |
| | | | | US | 2009213817 | A1 | 27-08-2009 |
| US 2009303970 | A1 | | 10-12-2009 | CN | 101605362 | A | 16-12-2009 |
| | | | | EP | 2134133 | A1 | 16-12-2009 |
| | | | | JP | 2009296522 | A | 17-12-2009 |
| | | | | KR | 20090127825 | A | 14-12-2009 |
| | | | | US | 2009303970 | A1 | 10-12-2009 |
| EP 2056505 | A1 | | 06-05-2009 | CN | 101485107 | A | 15-07-2009 |
| | | | | EP | 2056505 | A1 | 06-05-2009 |
| | | | | JP | 4776685 | B2 | 21-09-2011 |
| | | | | JP | WO2008004609 | A1 | 03-12-2009 |
| | | | | KR | 20090021293 | A | 02-03-2009 |
| | | | | US | 2009196203 | A1 | 06-08-2009 |
| | | | | WO | 2008004609 | A1 | 10-01-2008 |
| US 2019191440 | A1 | | 20-06-2019 | CN | 111279623 | A | 12-06-2020 |
| | | | | EP | 3649742 | A2 | 13-05-2020 |
| | | | | US | 2019191440 | A1 | 20-06-2019 |
| | | | | WO | 2019118915 | A2 | 20-06-2019 |
| EP 2439998 | A1 | | 11-04-2012 | CN | 102461308 | A | 16-05-2012 |
| | | | | EP | 2439998 | A1 | 11-04-2012 |
| | | | | JP | 5392349 | B2 | 22-01-2014 |
| | | | | JP | WO2010140586 | A1 | 22-11-2012 |
| | | | | KR | 20120025560 | A | 15-03-2012 |
| | | | | US | 2012082123 | A1 | 05-04-2012 |
| | | | | WO | 2010140586 | A1 | 09-12-2010 |

EPO FORM P0459

For more details about this annex : see Official Journal of the European Patent Office, No. 12/82